# EUROPEAN PATENT SPECIFICATION

(11) **EP 1 624 589 B1**
(45) Date of publication and mention of the grant of the patent: **02.07.2008**
(21) Application number: 05016155.3
(22) Date of filing: 26.07.2005
(51) Int. Cl.: H04B 1/40

(54) **Method and apparatus for radio communications with analog and digital modulation**
Vorrichtung und Verfahren für ein Funkkommunikationssystem mit analoger und digitaler Modulation
Appareil et procédé pour un système de communication radio avec modulation analogique et numérique

(30) Priority: 03.08.2004 IT MI20041599
(43) Date of publication of application: 08.02.2006
(73) Proprietor: Selex Communications S.P.A., 16151 Genova (IT)
(72) Inventor: Zani, Nicola, 25075 Nave (BS) (IT); Residori, Francesco, 37129 Verona (IT); Lucano, Daniele, 20097 San Donato Milanese (MI) (IT)
(74) Representative: Deambrogi, Edgardo

(56) References cited:
- EP-A- 1 096 818
- US-A- 5 038 342
- US-A- 5 163 159
- US-A- 5 228 074
- US-A- 5 848 353
- US-B1- 6 282 184
- US-B1- 6 404 775
- US-B1- 6 675 024

## Description

The present invention refers to the field of mobile radio communications and is relative to a method that allows terminal mobile radio apparatuses able of using the FM (Frequency Modulation) analog radio technology and/or the digital radio technology, in particular the type 4FSK (4-level Frequency Shift Keying) digital radio technology, to perform voice and/or data communications using a single radio infrastructure. The technology introduced here can, for instance, be used in the PMR (Professional Mobile Radio) systems, which are systems typically used by public bodies or big private enterprises to solve the problem of the migration of a radio communication system or, in other words, to manage the transition phase of a communication system from FM analog radio technology to the 4FSK digital radio technology.

### STATE OF THE ART

A mobile radio communication system is composed of two separate elements:
1. a set of terminal apparatuses;
2. a radio infrastructure.

A terminal apparatus is an electronic device which is able of communicating with other terminal apparatuses by exploiting the use of radio waves. By means of the terminal apparatuses, the human users of the mobile radio communication system can carry out voice and/or data communication by suitably acting on the terminal apparatuses themselves. The set of the terminal apparatuses belonging to the same communication system constitutes the system fleet.

The terminal apparatuses can communicate between themselves either directly or through a radio infrastructure.

The radio infrastructure is a set of electronic devices which has the task of allowing communication between two or more terminal apparatuses which are far from each other and cannot communicate directly with each other.

The radio infrastructure operates in the following way: it receives the radio signal transmitted by a terminal apparatus and rebroadcasts it so that the signal can reach the terminal or the terminals involved in the communication in progress.

The radio infrastructure can be concentrated in a single location (in case of the single relay) or it can be distributed in various locations interconnected with each other (in case of multiple interconnected relays). The use of one solution or the other depends fundamentally on the extension of the territorial area which is to be served by the communication system.

An example of the utilization of said technology is offered by the system and devices described in the USA patent n° 5.848.353. The problem faced by the reference is that to provide a low cost mobile phone system and set whit a simplified circuitry capable of utilization even outside a mobile.

To achieve the above object, a mobile phone set comprises a base unit and at least one handset capable of radio transmission/reception with said base unit, said base unit being capable of digital transmission/reception between a fixed transmitting station and the base unit and the handset being capable of analog transmission/reception between the base unit and the handset.

According to the purpose of that solution, all the handsets have the same structure and the same circuitry and operate in the same manner.

From the 70's, the terminal apparatuses of the communication systems of the PMR type used the FM analog modulation for radio communication. Consequently, the radio infrastructure of the system was specifically designed for the reception, elaboration and transmission of a FM analog modulated radio signal.

Starting from the 90's [H.P. A. Ketterling, "Introduction to Digital Professional Mobile Radio", Artech House Publishers - 2004, page 1], the PMR world has greatly developed toward digital communication systems or toward systems which use a digital radio modulation to perform radio communication between the terminal apparatuses. In particular, next to proprietary communication systems, for instance iDEN (Integrated Digital Enhanced Network) of Motorola and TETRAPOL of EADS Telecom, other standardization activities for communication systems have been started such as, for instance, APCO P.25 (Association of Public Safety Communication Officials, Project 25) by TIA/EIA (Telecommunication Industry Association / Electronic Industry Association) in the United States and TETRA (TErrestrial TRunked RAdio) by ETSI (European Telecommunication Standard Institute) in Europe. Therefore, at present, there are radio communication systems in the market composed of terminal apparatuses which use the digital radio modulation and radio infrastructures which specifically handle such digitally modulated signals.

The concurrent existence of these two radio technologies (FM analog and digital) brought, as a consequence, the introduction in the market of a certain type of terminal apparatuses able of using both technologies to communicate. Such terminal apparatuses are therefore able of communicating either by using an FM analog radio modulation or by using a digital radio modulation.

The situation which occurs more and more frequently in a PMR type communication system is that in which there is a fleet composed of terminal apparatuses of mixed type or , in other words, of terminal apparatuses that use different radio technologies. In particular, the terminal apparatuses can be of three types:
1. Terminal apparatuses that transit and receive only FM analog modulated signals (T1 type terminal apparatuses);
2. Terminal apparatuses that transmit and receive only digital modulated signals (T2 type terminal apparatuses);
3. Terminals that transmit and receive modulated signals both in FM analog mode and in digital mode (T3 type terminal apparatuses).

The various types of terminal apparatuses present in the same fleet might be used, for instance, to perform different communication; in such case the T1 and T3(used in analogic mode) type terminal apparatuses could be used to perform voice communication, while the T2 and T3 (used in digital mode) type could be used for data transmission. Alternatively, the various types of terminal apparatuses can be assigned to different types of users, inside the same fleet. The T1 type apparatuses, for instance, can be assigned to generic customers, while the T2 or T3 type terminal apparatuses can be assigned to users with more sophisticated communication requirements.

In a fleet with all three types of terminal apparatuses, or even with a subset of those, there is the problem of how to guarantee communication between these terminal apparatuses.

In effect, if the radio infrastructure is specific for an FM analog modulated signal, the only apparatuses that can comunicate are those of the T1 and T3 type. In this case, however, the T3 type terminal apparatuses cannot exploit the digital communication mode and the whole set of services that such mode can offer to the user. The T2 type terminal apparatuses, instead, are completely excluded from the communication.

If the radio infrastructure is specific for a digitally modulated radio signal, the only terminal apparatuses which can communicate are those of the T2 and T3 type, while the T1 type terminal apparatuses are completely excluded from the communication.

Therefore, the problem which emerges is the difficulty of guaranteeing to all types of terminal apparatuses the possibility of performing communication using the existing radio infrastructures.

### SUMMARY OF THE INVENTION

The present invention applies to the field of narrow band professional mobile radio communication (PMR) and refers to radio mobile systems which use, for communication between terminals, FM analog radio modulation or 4FSK digital radio modulation.

The subject of the present invention is a type of radio infrastructure which allows the terminal apparatuses to radio communicate both through the FM analog radio modulation and through the 4FSK digital radio modulation.

### BRIEF DESCRIPTION OF THE DRAWINGS

Figure 1 represents the overall functional architecture of the radio infrastructure of the mobile radio communication system in the case in which a transmission with an access key is associated to the FM analog system.
Figure 2 represents the functional architecture of the radio infrastructure in the case in which there is no association to the FM analog signal of a transmission with access key.
Figure 3 represents the overall functional architecture in the case of a simulcast type radio infrastructure.

### DETAILED DESCRIPTION OF THE INVENTION

Considering the fact that the system fleet is composed of the following types of terminal apparatuses:
1. Terminal apparatuses that transmit and receive only FM analog modulated signals (T1 type terminal apparatuses);
2. Terminal apparatuses that transmit and receive only 4FSK digital modulated signals (T2 type terminal apparatuses);
3. Terminals apparatuses that transmit and receive modulated signals both in FM analog mode and in 4FSK digital mode (T3 type terminal apparatuses).

It is the purpose of the present invention to guarantee the possibility of performing, automatically and transparently for the user, all the following radio communication:
- radio communication between two terminal apparatuses of type T1, in FM analog mode;
- radio communication between two terminal apparatuses of type T2, in 4FSK digital mode;
- radio communication between two terminal apparatuses of type T3, in FM analog mode or in 4FSK digital mode;
- radio communication between a terminal apparatus of type T1 and a terminal apparatus of type T3, in FM analog mode;
- radio communication between a terminal apparatus of type T2 and a terminal apparatus of type T3, in 4FSK digital mode.

The invention refers to a set of electronic devices, forming the mobile radio infrastructure, which are able of receiving, transmitting and elaborating both radio technologies used for communication: the FM analog and the digital one, in particular the one of the 4FSK type, and refers to a method to make said electronic devices operational.

In detail, the functionalities of the devices forming the radio infrastructure are the following:
- to receive the signal coming from a mobile radio apparatus;
- to modulate and demodulate an FM analog radio signal;
- to modulate and demodulate a 4FSK digital radio signal;
- to automatically identify the type of radio signal (FM analog or 4FSK digital) present at the input of the radio receiver and to apply the specific elaboration process;
- to transmit the so elaborated signal, using the same format of the input radio signal.

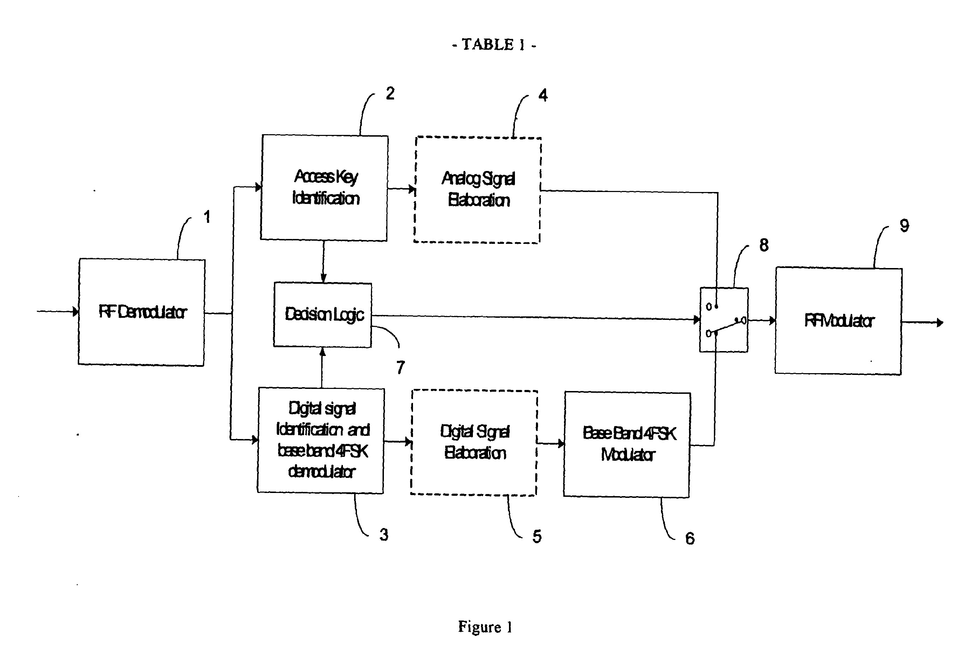

Figure 1 shows in detail the functional architecture of the radio infrastructure. For said architecture we consider the case in which the transmission of an FM analog signal is always associated with an access key. Said access key can be, for instance, a tone with a sub-audio frequency CTCSS (Continuous Tone Coded Squelch System). The blocks forming the radio infrastructure are the following:
- The "RF Demodulator" block 1, which supplies a real signal in the base band, proportional to the instantaneous frequency of the radio frequency (RF) signal in input;
- the block "Access Key Identification" 2. Said block has the task, starting from the base band real signal, of establishing the presence of the access key associated with the analog signal. Said block can be, for instance, a decoder with a sub-audio frequency tone if the terminal apparatuses use the CTCSS (Continuous Tone Coded Squelch System) tones to gain access to the communication system;
- the block "4FSK Digital Signal Identification and Base Band Demodulator" 3. Said block has the task, starting from the base band real signal, of establishing whether the signal is the result of the 4FSK digital modulation and, if so, of assessing the sequence of bits transmitted by the terminal apparatus;
- the block "Analog Signal Elaboration" 4. Said block, if present, has the task of performing an elaboration of the analog signal coming from the block "Access Key identification" 2. The elaboration can be, for instance, the filtration of the base band signal to remove noise.
- the block "Digital Signal Elaboration" 5. Said block, if present, has the task of elaborating the bit sequence assessed by the block "4FSK Digital Signal Identification and Base band Demodulator" 3. The elaboration can be, for instance, the removal of the errors introduced by the radio channel through the use of the channel coding;
- the block "Base Band 4FSK Modulator" 6. Said block has the task of forming the waveform which modulates in frequency the 4FSK signal starting from the elaborated information bits;
- the block "Decision Logic" 7 which, on the basis of the information received from block 2 and from the block 3, activates "Switch" 8 to supply the correct input to the block "RF Modulator" 9.
   a. If block (2) signals the presence of an analog modulation radio signal, the "Decision Logic" 7 activates "Switch" 8 so that the signal produced by the block "Analog Signal Elaboration" 4 reaches the "RF Modulator 9;
   b. If the block (3) signals the presence of a 4FSK digital modulation radio signal, the "Decision Logic" 7 activates the "Switch" 8 so that the "RF Modulator" 9 receives the signal produced by the block "4FSK Base Band Modulator" 6;
- the block "Switch" 8, which has the task of physically connecting, based on the indication from block 7, the output of block 4 or the output of block 6 to the block "FM Modulator" 9;
- the block "RF Modulator" 9, which generates a RF signal with a frequency modulation starting from the modulating waveform at the input.

The set of blocks 2, 3, and 7 constitutes the functional part of the radio infrastructure which allows the management of the radio communication automatically and transparently for the user. In particular, blocks 2 and 3 operate in parallel, analyzing the real signal in base band received from block 1.

If at the input of the radio infrastructure there is a signal with FM analog modulation with an access key, block 2 performs the identification of the access key, informs block 7 of the presence of an analog type signal and forwards the analog signal to block 4 for its elaboration. At the same time, block 3 does not acknowledge any signal of the 4FSK digital type, in the real signal in base band coming from block 1, and therefore blocks 5 and 6 do not start to operate.

Vice versa, if at the input of the radio infrastructure there is a signal with 4FSK digital modulation block 3 performs its identification, informs block 7 of the presence of a digital type signal, estimates the bit sequence and forwards the bit sequence to block 5 for its elaboration. In its turn, block 5 forwards the bit sequence elaborated by block 6 for building the modulating waveform. At the same time block 2 does not acknowledge any access key inside the real signal in base band coming from block 1, and therefore block 4 does not start to operate.

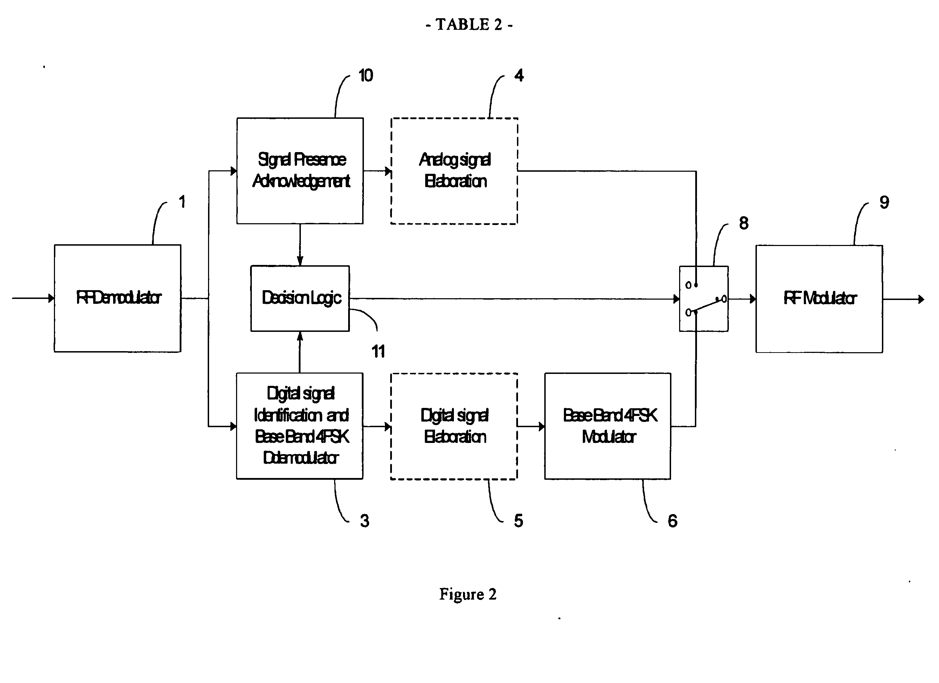

Figure 2 shows the functional architecture of the radio infrastructure in the case in which the FM analog signal is never associated with an access key. In such a situation, block 2 "Access Key Identification" is substituted by block 10 "Signal Presence Acknowledgement" and block 7 is substituted by block 11 "Decision Logic". The functionalities of said blocks are the following:
- block 10 "Signal Presence Acknowledgment". Said block has the task, starting from what is received from block 1, of assessing the presence or not of a real signal in base band;
- block 11 "Decision Logic" which, according to the information received by block 10 and block 3, activates "Switch" 8 to supply the correct input to block 9 "RF Modulator".
   c. If block 10 signals the presence of a real signal in base band and block 3 does not signal the presence of a 4FSK digital modulation radio signal, the "Decision Logic" 11 activates "Switch" 8 so that the signal produced by block 4 reaches the "RF Modulator" 9;
   d. If the block 10 signals the presence of a real signal in base band and block 3 signals the presence of a 4FSK digital modulation radio signal, the "Decision Logic" 11 activates "Switch" 8 so that the signal produced by block 6 reaches the "RF Modulator" 9;

The set of blocks 3, 10 and 11 constitutes the functional part of the radio infrastructure which allows the management of radio communication automatically and transparently for the user. In particular, blocks 3 and 10 operate in parallel, analyzing the real signal in base band received from block 1.

If at the input of the radio infrastructure there is an analog modulation signal, without an access key, block 10 acknowledges the presence of a generic signal, informs block 11 and forwards said signal to block 4 for its elaboration. At the same time, block 3 does not acknowledge any 4FSK digital type signal, inside the real signal in base band coming from block 1, and, therefore, blocks 5 and 6 do not start to operate. Block 11, receiving in input from block 10 the information of the presence of a generic signal and without receiving any information from block 3, presumes that the signal at the input of the radio infrastructure is of the analog type and activates block 8 so that the signal produced by block 4 reaches block 9.

Vice versa, if at the input of the radio infrastructure there is a signal with a 4FSK digital modulation, block 3 performs its identification, informs block 11 of the presence of a digital type signal, assesses the bit sequence and forwards the bit sequence to block 5 for its elaboration. In its turn, block 5 forwards the sequence of elaborated bits to block 6 for building the modulating waveform. At the same time, block 10 acknowledges the presence of a generic signal coming from block 1, informs block 11 and forwards the signal to block 4 for its elaboration. Block 11, receiving in input from block 10 the information of the presence of a generic signal and from block 3 the information of the presence of a digital type signal, presumes that the signal at the input of the radio infrastructure is of the digital type and activates block 8 so that block 9 receives the signal produced by block 6.

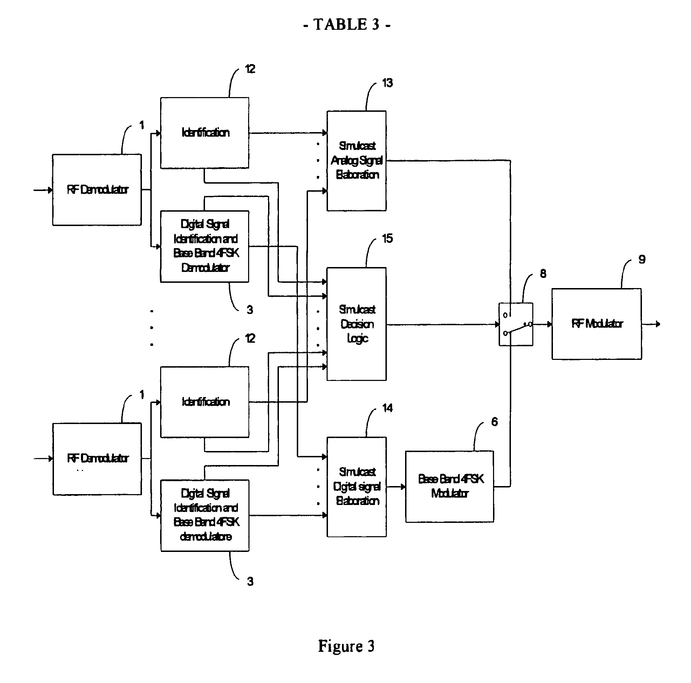

Figure 3 shows the overall functional architecture in the case of a radio infrastructure of the simulcast type, composed of multiple interconnected relays. In comparison with figures 1 and 2, figure 3 highlights the fact that there might be more than one signal present at the same time at the input of the communication system for a radio infrastructure of such type. The blocks with functionalities that are different with respect to what is described in figures 1 and 2 are:
- block 12 "Identification". Said block represents the block 2 "Access Key Identification" in the case in which the FM analog radio signals are associated with an access key, or represents the block 10 "Signal Presence Acknowledgment" in the case in which the FM analog radio signals do not have an access key;
- block 13 "Simulcast Analog Signal Elaboration". Said block has the task of performing an elaboration of the analog signals coming from the 12 blocks. The elaboration can be, for instance, the selection of the best signal among various replications of the same signal or an appropriate combination of the various replications of the same signal;
- block 14 "Simulcast Digital Signal Elaboration". Said block has the task of elaborating the bit sequences assessed by the 3 blocks. The elaboration can be, for instance, the choice of the correct replication of the same signal among all those received;
- block 15 "Simulcast Decision Logic" which, according to the information received from the 12 and 3 blocks, activates "Switch" 8 to supply the correct input to block 9 "RF Modulator".
   e. If at the input of the radio infrastructure there is the presence of one or more replications of an analog modulation radio signal, the "Simulcast Decision Logic" 15 activates "Switch" 8 so that the "RF Modulator" 9 receives the signal produced by block 13;
   f. If at the input of a radio infrastructure there is the presence of one or more replications of a 4FSK digital modulation radio signal, the "Simulcast Decision Logic" 15 activates "Switch" 8 so that the "RF Modulator 9 receives the signal produced by block 6;
   g. If in input to the radio infrastructure there is the concurrent presence of one or more replications of an analog modulation radio signal and of one or more replications of a 4FSK digital modulation radio signal, the "Simulcast Decision Logic" 15 chooses, based on an internal configuration, which of the two signals to forward to block 9 "RF Modulator" and activates "Switch" 8 in the appropriate way;
   While in the description of this invention we specifically referred to the 4FSK digital radio technology, it must be understood, however, that any other digital radio technology can be used without moving away from the purpose of this invention as appears evident from the following claims.

## Claims

1. A method to allow terminal mobile radio apparatuses, able of using an analog radio transmission technology and/or a digital radio technology, to perform between themselves voice and/or data communication through a radio infrastructure including at least a relay station which comprises an analog signal elaboration device, a digital signal elaboration device and an RF modulator adapted to generate an RF signal with a frequency modulation starting from the modulating waveform at the input, said method comprising the following steps performed by a single relay station:
- receiving a signal transmitted by a terminal apparatus;
- demodulating said received signal
- analyzing the demodulated signal in order to detect whether the signal is of the analog or of the digital type;
- elaborating the demodulated signal according to the type of modulation of the signal itself;
- switching the input of said RF modulator between the outputs of said two signal elaboration devices according to the type of the detected signal itself, in order to supply the corresponding input to the RF modulator;
- re-modulating the demodulated signal according to the signal type;
- transmitting the re-modulated signal to the terminal apparatus or apparatuses to which it is posted.

2. A method according to claim 1, further comprising the steps:
and/or a digital radio technology, to perform between themselves voice and/or data communication, said radio infrastructure including at least a relay station comprising:
- means (1) of RF demodulation, adapted to receive the signal transmitted by a terminal apparatus;
- means (2, 10, 12) of identification of an analog signal coming from the means (1) of RF demodulation;
- means (4, 13) adapted to elaborate the analog signal coming from said analog signal identification means (2, 10, 12) according to the type of modulation of the signal itself;
- means (3) of identification of a digital signal coming from the means (1) of RF demodulation;
- means (5, 14) adapted to elaborate the digital signal coming from said digital signal identification means (3) according to the type of modulation of the signal itself;
- means (6) of modulation of the digital signal coming from the said digital signal elaborating means (5, 14);
- means (7, 11, 15) of decisional logic connected to the means (2, 10, 12) of identification of an analog signal and to the means (3) of identification of a digital signal, adapted to acknowledge the presence of an analog or a digital signal;
- switching means (8) connected to the means (7, 11, 15) of decisional logic, adapted to establish a connection respectively between the means (2, 10, 12) of identification of an analog signal or the means (6) of modulation of the digital signal and means (9) of RF modulation, depending on whether the signal is of the analog or of the digital type; and
- demodulating the digital signal in base band;
- modulating the digital signal in base band.

3. A method according to claim 1, in which the analog signal can be associated in transmission with a radio infrastructure access tone.

4. A method according to claim 3, in which the access tone is constituted by a sub-audio frequency-tone of the CTCSS type.

5. A method according to claim 1, in which the analog signal elaboration includes the filtration of the base band signal to remove noise.

6. A method according to claim 1, in which the digital signal is of the 4FSK type.

7. A method according to claim 2, in which the elaboration of the digital signal in base band comprises the correction of errors introduced by the radio channel through the use of channel codification.

8. A method according to claim 1, in which, in the case of a simulcast network, the analog signal elaboration includes the selection of the best signal among various replications of the same signal, and the elaboration of the digital signal includes the choice of a correct replication from all the received replications of the same signal.

9. A radio infrastructure to allow terminal mobile radio apparatuses, able of using an analog radio technology
- means (9) of RF modulation, adapted to modulate the signal coming from the switching means (8) and to transmit it to the terminal apparatus or apparatuses to which the signal is posted.

10. A radio infrastructure according to claim 9, in which the means (1) of RF modulation are adapted to supply a digital signal in base band.

11. A radio infrastructure according to claim 9, in which the means (4) of elaboration of the analog signal comprise a filter for noise removal.

12. A radio infrastructure according to claim 9, in which the means (13) of elaboration of the analog signal, in the case of a simulcast network, are adapted to select the best signal from various replications of the same signal or to appropriately combine the various replications of the same signal.

13. A radio infrastructure according to claim 9, in which the means (5) of elaboration of the digital signal are adapted to correct the errors introduced by the radio channel through the use of channel codification.

14. A radio infrastructure according to claim 9, in which the means (14) of elaboration of the digital signal, in the case of a simulcast network, are adapted to choose a correct replication of the same signal from all the ones received.

15. A radio infrastructure according to claim 9, in which the means (3) of demodulation of the digital signal and the means (6) of modulation of the digital signal comprise a 4FSK demodulator and a 4FSK base band modulator, respectively.

## Patentansprüche

1. Verfahren, um es Endgerät-Mobilfunkvorrichtungen, die in der Lage sind, eine analoge Funkübertragungstechnologie und/oder eine digitale Funktechnologie zu verwenden, zu ermöglichen, zwischen ihnen selbst Sprech- und/oder Datenkommunikation auszuführen durch eine Funkinfrastruktur, welche wenigstens eine Relaisstation umfasst, die ein Analogsignalausarbeitungsgerät, ein Digitalsignalausarbeitungsgerät und einen RF-Modulator umfasst, wobei der RF-Modulator geeignet ist, ein RF-Signal mit einer Frequenzmodulation beginnend mit der Modulierungswellenform am Eingang zu erzeugen, wobei das Verfahren die folgenden Schritte umfasst, welche durch eine einzelne Relaisstation ausgeführt werden:
- Empfangen eines von einer Endgerät-Vorrichtung übertragenen Signals;
- Demodulieren des empfangenen Signals;
- Analysieren des demodulierten Signals, um zu ermitteln, ob das Signal von der analogen oder der digitalen Art ist;
- Ausarbeiten des demodulierten Signals gemäß der Art der Modulation des Signals selbst;
- Umschalten des Eingangs des RF-Modulators zwischen den Ausgängen der beiden Signalausarbeitungsgeräte gemäß der Art des ermittelten Signals selbst, um dem RF-Modulator den entsprechenden Eingang zuzuführen;
- Re-Modulieren des demodulierten Signals gemäß der Signalart;
- Übertragen des re-modulierten Signals zu der Endgerät-Vorrichtung oder zu den Endgerät-Vorrichtungen, zu welcher/welchen es verschickt wurde.

2. Verfahren nach Anspruch 1, ferner umfassend die Schritte:
- Demodulieren des digitalen Signals im Basisband;
- Modulieren des digitalen Signals im Basisband.

3. Verfahren nach Anspruch 1, wobei das analoge Signal in der Übertragung einem Funkinfrastrukturzugangston zugeordnet werden kann.

4. Verfahren nach Anspruch 3, wobei der Zugangston durch einen Sub-Audio-Frequenzton der CTCSS-Art beschaffen ist.

5. Verfahren nach Anspruch 1, wobei die Analogsignalausarbeitung das Filtern des Basisbandsignals umfasst, um Rauschen zu entfernen.

6. Verfahren nach Anspruch 1, wobei das digitale Signal von der 4FSK-Art ist.

7. Verfahren nach Anspruch 2, wobei die Ausarbeitung des digitalen Signals im Basisband die Korrektur von Fehlern umfasst, welche von dem Funkkanal durch die Verwendung von Kanalkodierung eingebracht wurden.

8. Verfahren nach Anspruch 1, wobei im Fall eines Simultanübertragungsnetzwerkes die Analogsignalausarbeitung die Auswahl des besten Signals unter verschiedenen Replikationen desselben Signals umfasst, und die Ausarbeitung des digitalen Signals die Wahl einer korrekten Replikation aus allen empfangenen Replikationen desselben Signals umfasst.

9. Funkinfrastruktur, um es Endgerät-Mobilfunkvorrichtungen, die in der Lage sind, eine analoge Funktechnologie und/oder eine digitale Funktechnologie zu verwenden, zu ermöglichen, zwischen ihnen selbst Sprech- und/oder Datenkommunikation auszuführen, wobei die Funkinfrastruktur wenigstens eine Relaisstation umfasst, welche umfasst:
- Mittel (1) zur RF-Demodulation, die geeignet sind, das von einer Endgerät-Vorrichtung übertragene Signal zu empfangen;
- Mittel (2, 10, 12) zur Identifikation eines analogen Signals, welches von den Mitteln (1) zur RF-Demodulation kommt;
- Mittel (4, 13), die dazu geeignet sind, das analoge Signal auszuarbeiten, welches von den Analogsignalidentifikationsmitteln (2, 10, 12) kommt, gemäß der Modulationsart des Signals selbst;
- Mittel (3) zur Identifikation eines digitalen Signals, welches von den Mitteln (1) zur RF-Demodulation kommt;
- Mittel (5, 14), die dazu geeignet sind, das digitale Signal auszuarbeiten, welches von den Digitalsignalidentifikationsmitteln (3) kommt, gemäß der Modulationsart des Signals selbst;
- Mittel (6) zur Modulation des digitalen Signals, welches von den Digitalsignalausarbeitungsmitteln (5, 14) kommt;
- Entscheidungslogikmittel (7, 11, 15), welche mit den Mitteln (2, 10, 12) zur Identifikation eines analogen Signals und mit den Mitteln (3) zur Identifikation eines digitalen Signals verbunden sind, und die dazu geeignet sind, das Vorhandensein eines analogen oder eines digitalen Signals zu bestätigen;
- Umschaltmittel (8), die mit den Entscheidungslogikmitteln (7, 11, 15) verbunden sind, und die dazu geeignet sind, eine Verbindung respektive zwischen den Mitteln (2, 10, 12) zur Identifikation eines analogen Signals oder den Mitteln (6) zur Modulation des digitalen Signals und den Mitteln (9) zur RF-Modulation einzurichten, abhängig davon, ob das Signal von der analogen oder der digitalen Art ist; und
- Mittel (9) zur RF-Modulation, die dazu geeignet sind, das Signal zu modulieren, welches von den Umschaltmitteln (8) kommt, und es zu der Endgerät-Vorrichtung oder den Endgerät-Vorrichtungen zu übertragen, zu welcher/welchen es verschickt wurde.

10. Funkinfrastruktur nach Anspruch 9, wobei die Mittel (1) zur RF-Modulation dazu geeignet sind, ein digitales Signal im Basisband zu liefern.

11. Funkinfrastruktur nach Anspruch 9, wobei die Mittel (4) zur Ausarbeitung des analogen Signals einen Filter zum Entfernen von Rauschen umfassen.

12. Funkinfrastruktur nach Anspruch 9, wobei die Mittel (13) zur Ausarbeitung des analogen Signals im Fall eines Simultanübertragungsnetzwerkes dazu geeignet sind, das beste Signal aus verschiedenen Replikationen desselben Signals zu wählen oder passend die verschiedenen Replikationen desselben Signals zu kombinieren.

13. Funkinfrastruktur nach Anspruch 9, wobei die Mittel (5) zur Ausarbeitung des digitalen Signals dazu geeignet sind, die Fehler zu korrigieren, welche von dem Funkkanal durch die Verwendung von Kanalkodierung eingebracht wurden.

14. Funkinfrastruktur nach Anspruch 9, wobei die Mittel (14) zur Ausarbeitung des digitalen Signals im Fall eines Simultanübertragungsnetzwerkes dazu geeignet sind, eine korrekte Replikation desselben Signals von allen empfangenen zu wählen.

15. Funkinfrastruktur nach Anspruch 9, wobei die Mittel (3) zur Demodulation des digitalen Signals und die Mittel (6) zur Modulation des digitalen Signals einen 4FSK-Demodulator beziehungsweise einen 4FSK-Basisband-Modulator umfassen.

## Revendications

1. Procédé destiné à permettre à des appareils de communication radio mobiles formant terminaux - qui sont aptes à utiliser une technologie de communication radio analogique et/ou une technologie de communication radio numérique - de réaliser, entre eux, une transmission de données de voix et/ou de données par l'intermédiaire d'une infrastructure radio comprenant au moins une station relais qui comprend un dispositif de développement de signal analogique, un dispositif de développement de signal numérique, et un modulateur RF adapté pour produire un signal RF avec une modulation de fréquence qui commence par la forme d'onde de modulation au niveau de l'entrée, ledit procédé comprenant les étapes suivantes qui sont accomplies par une station relais unique et qui consistent à :
- recevoir un signal transmis par un appareil formant terminal ;
- démoduler ledit signal reçu ;
- analyser le signal démodulé afin de détecter si le signal est du type analogique ou du type numérique ;
- développer le signal démodulé en fonction du type de modulation du signal lui-même ;
- commuter l'entrée dudit modulateur RF entre les sorties desdits deux dispositifs de développement de signal en fonction du type du signal détecté lui-même, de façon à transférer l'entrée correspondante vers le modulateur RF ;
- re-moduler le signal démodulé en fonction du type de signal ;
- transmettre le signal re-modulé vers l'appareil (ou les appareils) auquel (auxquels) il est destiné.

2. Procédé selon la revendication 1, comprenant par ailleurs les étapes consistant à :
- démoduler le signal numérique dans la bande de base ;
- moduler le signal numérique dans la bande de base.

3. Procédé selon la revendication 1, dans lequel le signal analogique peut être associé - au moment de la transmission - à une tonalité d'accès d'une infrastructure radio.

4. Procédé selon la revendication 3, dans lequel la tonalité d'accès est constituée par une tonalité de fréquence infra-acoustique du type CTCSS.

5. Procédé selon la revendication 1, dans lequel le développement du signal analogique comprend l'étape consistant à filtrer le signal dans la bande de base afin d'éliminer le bruit.

6. Procédé selon la revendication 1, dans lequel le signal numérique est du type 4FSK.

7. Procédé selon la revendication 2, dans lequel le développement du signal numérique dans la bande de base comprend l'étape consistant à corriger des erreurs introduites par le canal radio lors de l'utilisation d'une codification de canal.

8. Procédé selon la revendication 1, dans lequel - dans le cas d'un réseau de diffusion simultanée - le développement du signal numérique comprend l'étape consistant à sélectionner le meilleur signal parmi diverses reproductions du même signal, et le développement du signal numérique comprend l'étape consistant à choisir une reproduction correcte parmi l'ensemble des reproductions reçues du même signal.

9. Infrastructure radio adaptée pour permettre à des appareils de communication radio mobiles formant terminaux - qui sont aptes à utiliser une technologie de communication radio analogique et/ou une technologie de communication radio numérique - de réaliser, entre eux, une transmission de données de voix et/ou de données, ladite infrastructure radio comprenant au moins une station relais comprenant :
- des moyens (1) de démodulation RF, adaptés pour recevoir le signal transmis par un appareil formant terminal ;
- des moyens (2, 10, 12) d'identification d'un signal analogique provenant des moyens (1) de démodulation RF ;
- des moyens (4, 13) adaptés pour développer le signal analogique provenant desdits moyens (2, 10, 12) d'identification d'un signal analogique en fonction du type de modulation du signal lui-même ;
- des moyens (3) d'identification d'un signal numérique provenant des moyens (1) de démodulation RF ;
- des moyens (5, 14) adaptés pour développer le signal numérique provenant desdits moyens (3) d'identification d'un signal numérique en fonction du type de modulation du signal lui-même ;
- des moyens (6) de modulation du signal numérique provenant desdits moyens (5, 14) de développement de signal numérique ;
- des moyens (7, 11, 15) de logique décisionnelle connectés aux moyens (2, 10, 12) d'identification d'un signal analogique et aux moyens (3) d'identification d'un signal numérique, adaptés pour reconnaître la présence d'un signal analogique ou d'un signal numérique ;
- des moyens de commutation (8) connectés aux moyens (7, 11, 15) de logique décisionnelle, adaptés pour établir une connexion respectivement entre les moyens (2, 10, 12) d'identification d'un signal analogique ou les moyens (6) de modulation du signal numérique et des moyens (9) de modulation RF, en fonction du fait que le signal est du type analogique ou du type numérique ; et
- des moyens (9) de modulation RF adaptés pour moduler le signal provenant des moyens de commutation (8), et pour le transmettre vers l'appareil (ou les appareils) formant terminal (terminaux) auquel (auxquels) le signal est destiné.

10. Infrastructure radio selon la revendication 9, dans laquelle les moyens (1) de modulation RF sont adaptés pour fournir un signal numérique dans la bande de base.

11. Infrastructure radio selon la revendication 9, dans laquelle les moyens (4) de développement du signal analogique comprennent un filtre pour éliminer le bruit.

12. Infrastructure radio selon la revendication 9, dans laquelle - dans le cas d'un réseau de diffusion simultanée - les moyens (13) de développement du signal analogique sont adaptés pour sélectionner le meilleur signal parmi diverses reproductions du même signal, ou bien pour combiner de façon adéquate les diverses reproductions du même signal.

13. Infrastructure radio selon la revendication 9, dans laquelle les moyens (5) de développement du signal numérique sont adaptés pour corriger les erreurs introduites par le canal radio lors de l'utilisation d'une codification de canal.

14. Infrastructure radio selon la revendication 9, dans laquelle - dans le cas d'un réseau de diffusion simultanée - les moyens (14) de développement du signal analogique sont adaptés pour choisir une reproduction correcte du même signal parmi l'ensemble des reproductions reçues.

15. Infrastructure radio selon la revendication 9, dans laquelle les moyens (3) de démodulation du signal numérique et les moyens (6) de modulation du signal numérique comprennent un démodulateur 4FSK et un modulateur 4FSK dans la bande de base, respectivement.
